# DEMANDE DE BREVET EUROPEEN

(11) **EP 2 735 842 A1**
(43) Date de publication de la demande: **28.05.2014**
(21) Numéro de dépôt: 13194049.6
(22) Date de dépôt: 22.11.2013
(51) Int. Cl.: G01B 11/04, B07C 5/10

(54) **Installation de contrôle optique d'une pièce millimétrique**

(30) Priorité: 23.11.2012 FR 1261189
(71) Demandeur: Expertise Vision, 74300 Thyez (FR)
(72) Inventeur: Bassy, Emmanuel, 74300 Thyez (FR); Burry, Jean-Michel, 01110 Hauteville (FR)
(74) Mandataire: Croonenbroek, Thomas Jakob

(57) **Abrégé**

L'invention concerne une installation (1) de contrôle optique notamment des dimensions d'une pièce millimétrique (3), comprenant
• un dispositif (5) d'éclairage de la pièce millimétrique (3),
• au moins un dispositif (7) d'acquisition d'images,
• un support (9) de la pièce millimétrique (3) qui est au moins transparent au niveau d'au moins un plan d'observation (11) dudit au moins un dispositif (7) d'acquisition d'images,

caractérisée en ce qu'elle comprend une optique de déviation (15) d'une partie des rayons de lumière en sortie du dispositif (5) d'éclairage de la pièce millimétrique (3) sous au moins un deuxième angle pour obtenir au moins un deuxième plan d'observation (19) supplémentaire de la pièce millimétrique (3).

## Description

La présente invention concerne une installation de contrôle optique d'une pièce millimétrique, notamment de ses dimensions.

On connaît un certain nombre de pièces millimétriques de forme générale présentant une symétrie axiale : des pièces cylindriques (comme par exemple des broches de connecteurs, des petites tiges, des vis, etc.), ou des pièces parallélépipédiques (comme par exemple des implants médicaux, des maillons, des pênes, etc.), ou encore des pièces sphériques (comme par exemple des billes de roulement) produites en série. Leurs dimensions n'excèdent généralement pas 200mm sur l'axe de symétrie principal et 30mm autour de l'axe.

Certaines de ces pièces millimétriques doivent être réalisées avec une très haute précision. Ainsi, par exemple pour une vis haute précision de 1mm de long et de 0.3mm de diamètre, les tolérances de fabrication peuvent être de l'ordre de quelques µm.

De telles pièces doivent être contrôlées à cent pour cent pour garantir l'absence de non-conformité dimensionnelle sur la géométrie extérieure. C'est à dire que toutes les pièces de la production doivent être contrôlées et triées. Cela est indispensable lorsque la non-conformité fait courir un risque grave lors de son utilisation ou lorsque le coût de la non-conformité est élevé.

Ces pièces de géométries différentes nécessitent un moyen de contrôle manuel ou automatique, simple d'utilisation et si possible polyvalent.

Pour contrôler des pièces avec une bonne précision de mesure, on connaît des mesures optiques comme par exemple celle décrite dans le document FR 295196 pour contrôler l'arrête de coupe d'un outil de coupe à l'aide d'une caméra télécentrique. Ce document rapporte une précision de mesure de l'ordre de 1µm.

On connaît également du document EP 0 804 976 un dispositif de mesure optique pour déterminer à l'aide d'une caméra le contour de pièces usinées qui glissent sur une glissière transparente à section transversale en « V » (formé de deux plaques assemblées à 90° l'une par rapport à l'autre). Dans ce cas également, la lumière est envoyée de façon parallèle sur la pièce usinée qui glisse sur la glissière transparente, et le contour est mesuré par une optique télécentrique. Dans le dispositif de ce document, plusieurs caméras sont utilisées pour pouvoir prendre en compte des tailles différentes des pièces usinées. On utilise alors toujours une seule caméra pour un type de pièces, celle avec la résolution la plus adaptée.

Ce dispositif présente néanmoins l'inconvénient que la pièce à contrôler ne peut être mesurée que sous un seul angle, ce qui n'est pas suffisant pour caractériser les cotes géométriques, telles que le battement par exemple.

Un inconvénient supplémentaire est que ce dispositif n'est pas adapté pour une mesure précise de la pièce. La pièce est en mouvement lors de la mesure ce qui génère un flou de déplacement lié au temps de l'obturateur de la caméra et une instabilité lors de la descente générant une incertitude sur le positionnement de la pièce et par conséquent sur la mesure elle-même.

Un inconvénient supplémentaire est que ce dispositif est mal adapté pour un poste manuel. Même utilisé à l'horizontal et sans alimentation automatique, il nécessite une rotation manuelle de la glissière pour mesurer les pièces selon un point de vue décalé de 45° par rapport au premier point de vue. Cela complique l'opération manuelle et peut conduire à une erreur d'alignement des pièces et à une erreur de mesure si l'opération n'est pas réalisée correctement.

Enfin, un dernier inconvénient consiste dans le fait qu'il est trop complexe, ce qui renchérit le coût de fabrication des pièces millimétriques une fois contrôlées.

Un but de l'invention est donc de proposer une installation de contrôle de pièces millimétriques qui soit plus précise, qui permette de contrôler notamment les cotes géométriques, qui soit plus simple d'utilisation et plus fiable et d'encombrement réduit, qui permette également une opération manuelle et dont le coût de fabrication est moindre.
A cet effet, l'invention propose une installation de contrôle optique des dimensions d'une pièce millimétrique, comprenant
- un dispositif d'éclairage de la pièce millimétrique,
- au moins un dispositif d'acquisition d'image,
- un support de la pièce millimétrique qui est au moins transparent au niveau d'au moins un plan d'observation dudit au moins un dispositif d'acquisition d'images,
caractérisée en ce qu'elle comprend une optique de déviation d'une partie des rayons de lumière en sortie du dispositif d'éclairage de la pièce millimétrique sous au moins un deuxième angle pour obtenir au moins un deuxième plan d'observation supplémentaire de la pièce millimétrique.

Ainsi, on éclaire la pièce sous deux angles différents et on peut observer la pièce à contrôler sous divers angles et contrôler en particulier les cotes géométriques de la pièce avec précision.

L'installation selon l'invention peut en outre comporter une ou plusieurs des caractéristiques suivantes, prises seule ou en combinaison :
Selon un aspect, l'optique de déviation comprend par exemple au moins un premier miroir de déviation placé sur le chemin d'une première portion des rayons de lumière en amont du support.
Selon un autre aspect, l'optique de déviation comprend en outre au moins un second miroir de déviation vers ledit au moins un dispositif d'acquisition d'images placé sur le chemin d'une portion des rayons de lumière en aval du support pour permettre une acquisition d'au moins deux plans d'observation par un même dispositif d'acquisition d'images.

Ceci permet donc d'obtenir avec un même dispositif d'acquisition d'images plusieurs plans d'observation. Sachant qu'un dispositif d'acquisition d'images est un des postes les plus importants en termes de coût dans une telle installation selon l'invention, on comprend que l'utilisation d'un seul dispositif d'acquisition d'images pour observer deux plans d'observation d'angles différents, permet d'optimiser le coût de l'installation dans son ensemble avec une performance renforcée. De plus, le temps d'alignement peut être réduit lors d'une première mise en route de l'installation.

De plus, cela permet aussi de réduire l'encombrement, car sinon au moins un éclairage et au moins un dispositif d'acquisition d'image supplémentaires seraient nécessaires.

En outre, la place au-dessous et au-dessus du support est entièrement libérée, ce qui permet une installation simple par exemple sur une table.

Selon un autre aspect, l'installation comprend un compensateur de chemin optique pour compenser la différence de chemin optique entre les rayons provenant des différents plans d'observation. Ce compensateur peut être placé entre le second miroir de déviation et le dispositif d'acquisition d'images. Ce compensateur de chemin optique comprend par exemple au moins un, ou plusieurs blocs de verre. Ceci permet de compenser l'écart de chemin optique des rayons lumineux ayant traversés l'un ou l'autre des deux plans d'observation. Dans le cas de pièces cylindriques, plus le diamètre de la pièce est élevé, plus le chemin optique augmente sur la direction d'observation soumis à l'optique de déviation, tandis que le chemin optique horizontal reste constant. Le compensateur de chemin optique permet d'adapter la correction en fonction du recul de la pièce millimétrique sur la direction d'observation soumis à l'optique de déviation, avec par exemple au moins un, ou plusieurs blocs de verre amovibles.

Selon encore une autre alternative, l'optique de déviation comprend au moins un troisième miroir de déviation placé sur le chemin d'une deuxième portion des rayons de lumière en amont du support pour éclairer une pièce millimétrique à contrôler sous un troisième angle pour obtenir un troisième plan d'observation de la pièce millimétrique.

Pour permettre une acquisition d'au moins trois plans d'observation par un même dispositif d'acquisition, l'optique de déviation comprend en outre au moins un quatrième miroir de déviation vers ledit au moins un dispositif d'acquisition d'images placé sur le chemin d'une deuxième portion des rayons de lumière situé en aval du support.

Pour éviter des aberrations chromatiques, la lumière émise par le dispositif d'éclairage de la pièce millimétrique est sensiblement monochrome.

Selon une variante, la lumière émise par le dispositif d'éclairage de la pièce millimétrique est polychrome et l'installation comprend au moins un premier et un second filtre spectral placé d'une part dans la portion des rayons de lumière à éclairage directe de la pièce millimétrique et d'autre part dans la portion des rayons de lumière soumis à l'optique de déviation. Chaque plan d'observation est donc observé avec une couleur dédiée, ce qui peut permettre de s'affranchir de certaines réflexions qui peuvent apparaître en fonction de la forme de la pièce à contrôler. Selon cette variante, on peut être amené à utiliser une caméra couleur dans le dispositif d'acquisition d'images.

Le support pour la pièce millimétrique à observer comprend par exemple deux plaques d'un matériau transparent par exemple assemblées à 90° et formant un « V » et disposées transversalement par rapport à la propagation de la portion des rayons de lumière émise directement vers le support. Un autre angle d'assemblage des plaques peut être choisi par exemple pour des pièces de section transversale hexagonale.

Par ailleurs, la pièce se positionne précisément au fond du support par gravité permettant un alignement répétable avec les directions d'observations du dispositif d'acquisition d'images : Par exemple, dans le cas de pièces parallélépipédiques, deux faces sont en appui sur chaque côté du support. Par exemple dans le cas de pièces parfaitement cylindriques, deux lignes sont en appui sur chaque côté du support, etc.

Selon un aspect, l'épaisseur de la plaque du matériau transparent côté dispositif d'acquisition d'images est plus fine que du côté dispositif d'éclairage de la pièce millimétrique, ce qui permet de minimiser des evt. effets d'aberrations induits par l'épaisseur du matériau du support en « V ». De plus, cela permet de réduire la zone morte entre les deux images due à l'ombre projetée de l'épaisseur de la plaque.

Le dispositif d'acquisition d'images comprend préférentiellement un objectif télécentrique et une caméra numérique, ce qui supprime la distorsion d'un objectif standard, augmente la profondeur de champ et améliore la précision de mesure.

La caméra numérique est par exemple une caméra noir et blanc / monochrome.

Pour poser la pièce millimétrique sur le support, l'installation comporte par exemple un bras manipulateur déplaçable selon un axe horizontal et selon un axe vertical pour saisir une pièce millimétrique à contrôler et pour la placer sur le support, ce qui permet d'obtenir un positionnement répétable et précis sur l'axe horizontal perpendiculaire à l'axe optique.

D'autres caractéristiques et avantages de l'invention ressortiront de la description suivante, donnée à titre d'exemple, sans caractère limitatif, au regard des dessins annexés sur lesquels :
- la figure 1 montre un schéma de côté d'une installation selon l'invention,
- la figure 2 montre une vue en perspective de l'installation avec un bras manipulateur,
- la figure 3 montre un exemple d'image d'une pièce millimétrique,
- la figure 4 montre un schéma de côté d'un autre mode de réalisation d'une installation selon l'invention.

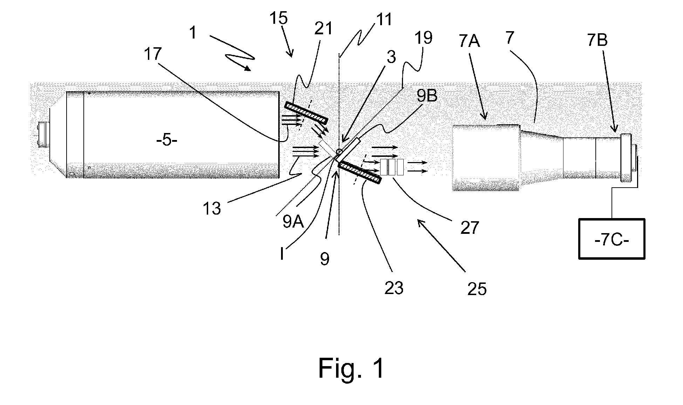

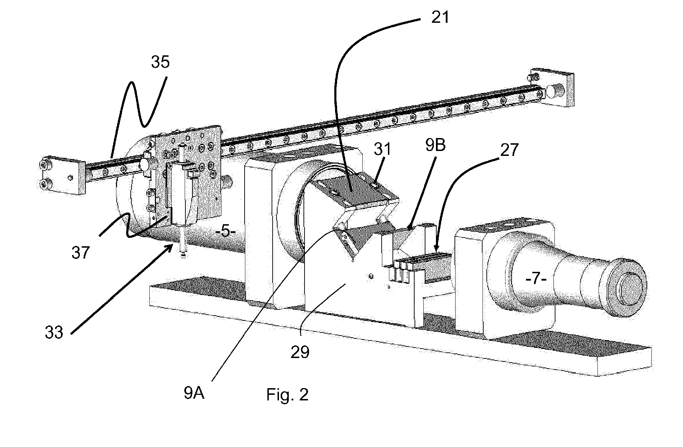

Sur ces figures, les éléments identiques portent les mêmes numéros de référence et l'invention va être décrite par la suite par rapport aux figures 1 et 2.

On se réfère d'abord aux figures 1 et 2.

Sur la figure 1 est représenté un schéma de côté d'une installation 1 de contrôle optique d'une pièce millimétrique 3, en particulier des dimensions et/ ou des défauts de géométrie extérieure ou de contour.

Par pièces millimétriques, on entend des pièces de petite taille par exemple inférieure à 200 mm de longueur sur l'axe de symétrie principal et inférieure à 30mm d'encombrement en section transversale, comme des pièces de révolution, une tige, une vis, un cylindre, des pièces prismatiques, parallélépipédiques ou encore sphériques.

Cette installation 1 comprend un dispositif 5 d'éclairage de la pièce millimétrique 3, et au moins un dispositif 7 d'acquisition d'images.

De préférence, le dispositif 5 d'éclairage de la pièce millimétrique peut émettre préférentiellement un faisceau de rayons de lumière sensiblement parallèles.

Le dispositif d'éclairage 5 comprend par exemple une source de lumière et un objectif optique pour rendre les rayons lumineux de la source de lumière parallèle. Le faisceau est un faisceau de section transversale ronde de 70mm de diamètre.

En variante, on peut aussi utiliser un diffuseur de lumière, c'est-à-dire par exemple une source lumineuse ponctuelle avec une plaque diffuseur, par exemple une plaque acrylique d'aspect laiteux.

Selon l'exemple représenté, la lumière émise par le dispositif d'éclairage 5 est sensiblement monochrome pour éviter des aberrations chromatiques.

En fonction de la résolution souhaitée, on choisira une longueur d'onde plus courte pour une résolution plus grande et une longueur d'onde plus longue pour une résolution plus faible. Typiquement, on utilise une longueur d'onde de 450nm.

Le dispositif d'acquisition d'images 7 comprend préférentiellement un objectif télécentrique 7A et une caméra numérique 7B.

La caméra numérique 7B est par exemple une caméra noir et blanc, ce qui a pour avantage d'obtenir un bon contraste des images et un coût de revient moindre. En particulier pour les contrôles de contours et de dimensions d'une pièce millimétrique, un bon contraste est souhaité. La caméra 7B est raccordée à une unité de traitement d'images 7C, par exemple un ordinateur, qui permet de traiter les images de la caméra 7B, d'en extraire les dimensions / contours de la pièce millimétrique et de comparer les valeurs mesurées aux valeurs de consigne pour décider si une pièce est conforme ou non.

L'objectif utilisé a par exemple un grossissement de 0,24 et le capteur utilisé possède 2448x2048 pixels recouvrant une surface de 8,4x7mm. Le champ de vision de l'ensemble objectif-capteur est donc de 35x29mm environ.

La pièce millimétrique 3 repose sur un support 9 qui est disposé sur le chemin optique défini par le dispositif 5 d'éclairage et le dispositif 7 d'acquisition d'images.

Le support 9 comprend par exemple deux plaques 9A et 9B d'un matériau transparent formant un « V » et disposées transversalement par rapport à la propagation de la portion des rayons de lumière à éclairage directe portant la référence 13. Le support et donc les plaques sont par exemple en verre, mais d'autres matériaux sont envisageables. On veille simplement que la qualité optique est telle que le support lui-même n'induit pas de diffusion de la lumière ou d'aberration géométrique significative qui détériorerai la qualité de la mesure.

Selon une variante non représentée, l'épaisseur de la plaque 9B du matériau transparent côté dispositif 7 d'acquisition d'images peut être plus fine que l'épaisseur de la plaque 9A côté dispositif d'éclairage 5, ce qui permet de minimiser des evt. effets d'aberrations induits par le verre de posage du support en « V ». De plus, cela permet de réduire la zone morte entre les deux images due à l'ombre projetée de l'épaisseur de la plaque 9B.

La forme en « V » présente en outre l'avantage qu'il y a un petit interstice « I » ou jour sous la pièce millimétrique 3 de sorte que l'on peut mesurer un contour complet. Une pièce de révolution comme une vis par exemple, repose avec quatre points d'appui sur le support 9 tandis qu'un cylindre repose sur deux lignes parallèles aux plaques 9A et 9B.

Dans le présent exemple, le support 9 est complètement transparent.

Toutefois, selon une variante non représentée, on peut envisager que le support 9 est seulement transparent au niveau d'au moins un plan d'observation 11 du dispositif 7 d'acquisition d'images, le plan d'observation 11 étant simplement un plan perpendiculaire aux rayons lumineux venant directement du dispositif 5 d'éclairage et centré par rapport au fond du « V » au niveau de la pièce millimétrique 3.

On comprend donc que les plaques 9A et 9B du support 9 forment des points d'appui latéraux de la pièce millimétrique 3 centrant par gravité la pièce millimétrique 3 dans le plan d'observation 11 du dispositif 7 d'acquisition d'image.

Par les rayons lumineux parallèles 13 (représentés par trois flèches), la pièce millimétrique 3 est éclairée directement à travers la plaque 9A. Certains rayons de lumière sont arrêtés (sur le dessin le rayon de lumière représenté par la flèche du milieu) ou déviés par la pièce millimétrique et ne parviennent pas au dispositif 7 d'acquisition d'images. La pièce millimétrique 3 avec son contour apparaît donc noire sur l'image. C'est ainsi que l'on peut déterminer avec précision le contour de la pièce millimétrique 3 pour contrôler sa conformité.

L'installation 1 comprend en outre une optique 15 de déviation d'une partie des rayons de lumière en sortie du dispositif 5 d'éclairage apte à éclairer la pièce millimétrique 3 sous un deuxième angle, par exemple de 45° par rapport au plan d'observation 11 pour obtenir au moins un deuxième plan d'observation 19 supplémentaire.

Ainsi, on éclaire la pièce millimétrique 3 sous deux angles différents et on peut l'observer sous divers angles et mieux contrôler son contour dans sa globalité. Ceci permet de réduire considérablement le coût de l'installation 1, le temps de réglage et aussi son encombrement.

L'optique 15 de déviation comprend par exemple un premier miroir de déviation 21 placé sur le chemin d'une première portion 17 des rayons de lumière en amont du support 9.

Selon un autre aspect, l'optique de déviation comprend en outre au moins un second miroir de déviation 23 vers le dispositif 7 d'acquisition d'images placé sur le chemin des rayons de lumière en aval du support 9.

Ceci permet donc d'obtenir avec un même dispositif 7 d'acquisition d'images deux plans d'observation 11 et 19 sous des angles différents (par exemple à 0° - c'est-à-dire perpendiculaire aux rayons 13 et à 45°). Bien entendu, si l'angle entre les plaques 9A et 9B est différent de 90°, l'angle du second plan d'observation peut être différent.

La position des miroirs de déviation 21 et 23 par rapport au support 9 ainsi que leurs angles de réflexions des rayons lumineux d'une part, et la position du dispositif d'éclairage 5 et la position du dispositif d'acquisition image 7 d'autre part, peuvent être facilement adaptés, par exemple pour dégager le haut du support 9 en « V » pour obtenir une accessibilité plus aisée. Ceci s'avère très avantageux dans le cadre d'un poste manuel.

L'installation comprend par ailleurs un compensateur 25 de chemin optique placé entre le second miroir 23 de déviation et le dispositif 7 d'acquisition d'images. Ce compensateur 25 de chemin optique comprend par exemple au moins un, ou plusieurs, ici trois, blocs de verre 27. Ceci permet de compenser l'écart de chemin optique entre les deux plans d'observation. En fonction du nombre de blocs de verre, on obtient un compensateur réglable.

Selon une variante non représentée, le compensateur de chemin optique peut également être placé sur le trajet le plus court en rallongeant le trajet au lieu de raccourcir le trajet le plus long.

Comme on le voit sur la figure 2, le premier miroir de déviation 21, le support en « V » 9, le second miroir 23 et les blocs de verre 27 du compensateur 25 sont montés sur un même bâti 29, ce qui garantit la stabilité de l'alignement optique. Le bâti 29 est par exemple une pièce usinée avec précision qui assure à lui-même un bon alignement une fois que les éléments optiques y sont fixés, par exemple à l'aide de vis 31.

Pour poser la pièce millimétrique 3 sur le support 9, l'installation de contrôle 1 comporte par exemple un bras manipulateur 33 déplaçable selon un axe horizontal 35 et selon un axe vertical 37 pour saisir une pièce millimétrique 3 à contrôler et pour la placer sur le support 9, ce qui permet d'obtenir une position précise de la pièce sur l'axe horizontal. « Saisir » peut signifier une pince, mais aussi, ce qui est préféré ici, un moyen pneumatique, comme par exemple une aspiration de la pièce millimétrique 3 pour la maintenir et la manipuler. Le bras manipulateur 33 est robotisé et permet une précision de positionnement inférieure à 0,1mm.

L'installation de contrôle 1 fonctionne de la manière suivante :

Une pièce millimétrique 3 est prélevée par le bras manipulateur 33 d'un réservoir de pièces non représenté. Ce réservoir de pièces peut par exemple être un bol vibreur avec une rampe permettant de présenter une seule pièce à la fois au bras manipulateur 33, celle-ci orientée comme souhaité pour une bonne prise par le bras manipulateur 33.

Ce dernier transporte la pièce millimétrique 3 vers le support 9 en « V » et la pose sur ce dernier. Grâce à sa forme en « V », la pièce millimétrique 3 est automatiquement bien orientée et calée par la force gravitationnelle facilitant l'ergonomie et améliorant la précision de positionnement.

Il suffit donc de prendre une seule image à l'aide du dispositif 7 d'acquisition d'images pour obtenir deux contours de la pièce millimétrique 3 sous deux angles différents.

L'image est directement traitée par l'unité de traitement 7C. Si la pièce millimétrique est conforme selon les critères enregistrés dans l'unité de traitement (par exemple dimensions, contours etc.), le bras manipulateur 33 la transporte ensuite dans un récipient pour pièces conformes, sinon, la pièce est envoyée au rebut.

La présente installation 1 permet d'obtenir des mesures avec une très haute précision avec une dispersion de mesure inférieure à 0,3µm.

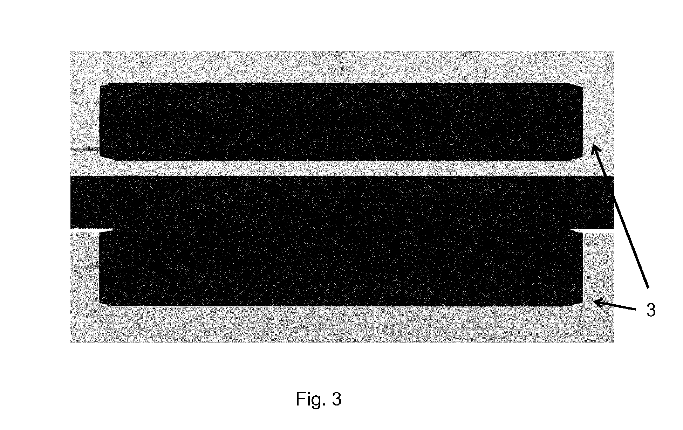

La figure 3 montre un exemple de pièce mesurée par le système. La pièce millimétrique 3 est ici un axe de 25mm de long et de 4mm de diamètre. On peut voir les 2 plans d'observation superposés. En haut une vue horizontale (vue en éclairage direct), en bas la vue à 45° (éclairage via un miroir de déviation). Entre les deux, la zone noire correspond à l'ombre portée de l'épaisseur des plaques de verre 9A et 9B, sous la pièce 3.

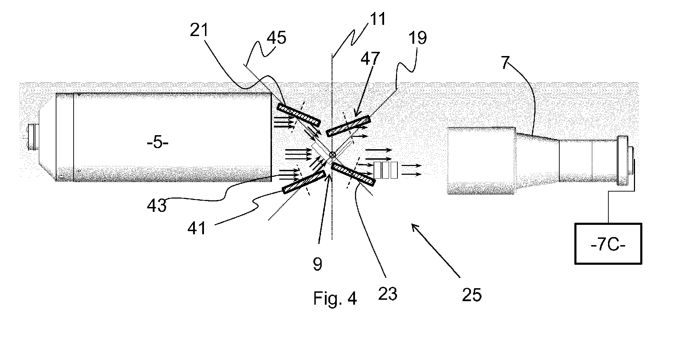

Sur la figure 4 est montré un autre mode de réalisation de l'installation de contrôle optique 1.

Cette installation 1 se distingue de celle des figures 1 et 2 , par le fait que l'optique de déviation comprend au moins un troisième miroir de déviation 41 placé sur le chemin d'une deuxième portion 43 des rayons de lumière en amont du support 9 pour éclairer une pièce millimétrique 3 à contrôler sous un troisième angle de -45° par exemple pour obtenir un troisième plan d'observation 45 de la pièce millimétrique 3.

Pour permettre une acquisition des trois plans d'observation 11, 19 et 45 par un même dispositif 7 d'acquisition, l'optique de déviation comprend en outre au moins un quatrième miroir de déviation 47 vers le dispositif 7 d'acquisition d'images, placé sur le chemin de la deuxième portion des rayons de lumière en aval du support.

Ce mode de réalisation est donc particulièrement économique pour contrôler une pièce millimétrique sous trois angles de vues.

De plus, comme les images sont prises par la même caméra 7B, l'installation se prête particulièrement bien pour mettre en relation les mesures des trois plans d'observation, ce qui permet de calculer par exemple un paramètre caractérisant la qualité dimensionnelle de la section transversale de la pièce millimétrique 3.

Bien entendu, d'autres variantes peuvent être envisagées sans sortir du cadre de la présente invention.

De la sorte, selon une variante non représentée, la lumière émise par le dispositif d'éclairage de la pièce millimétrique est polychrome et l'installation comprend au moins un premier et un second filtre spectral placé d'une part dans la portion des rayons lumineux à éclairage directe de la pièce millimétrique, c'est-à-dire avant les miroirs de déviation 21 ou 41 et d'autre part dans la portion des rayons lumineux soumis à l'optique de déviation.

Chaque plan d'observation est donc observé avec une couleur dédiée, ce qui peut permettre de s'affranchir de certaines réflexions qui peuvent apparaître en fonction de la forme de la pièce millimétrique à observer.

On comprend donc que l'installation de contrôle optique d'une pièce millimétrique 3 permet un contrôle précis et rapide de pièces issues d'une chaîne de fabrication pour les trier et assurer la conformité des pièces livrées à un client. Il va de soi qu'un tel tri préventif est moins coûteux qu'un retour de pièces par le client, sans parler d'une éventuelle perte d'image de marque à cause de la qualité de fabrication. Dans le cas d'implants médicaux par exemple, un défaut peut engendrer un risque de paralysie pour le patient.

## Revendications

1. Installation (1) de contrôle optique notamment des dimensions d'une pièce millimétrique (3), comprenant
• un dispositif (5) d'éclairage de la pièce millimétrique (3),
• au moins un dispositif (7) d'acquisition d'images,
• un support (9) de la pièce millimétrique (3) qui est au moins transparent au niveau d'au moins un plan d'observation (11) dudit au moins un dispositif (7) d'acquisition d'images,
**caractérisée en ce qu'**elle comprend une optique de déviation (15) d'une partie des rayons de lumière en sortie du dispositif (5) d'éclairage de la pièce millimétrique (3) sous au moins un deuxième angle pour obtenir au moins un deuxième plan d'observation (19) supplémentaire de la pièce millimétrique (3).

2. Installation de contrôle selon la revendication 1, **caractérisée en ce que** l'optique de déviation (15) comprend au moins un premier miroir (21) de déviation placé sur le chemin d'une première portion (17) des rayons de lumière en amont du support (9).

3. Installation de contrôle selon la revendication 1, **caractérisée en ce que** l'optique de déviation (15) comprend en outre au moins un second miroir (23) de déviation vers ledit au moins un dispositif (7) d'acquisition d'images placé sur le chemin d'une portion des rayons de lumière en aval du support pour permettre une acquisition d'au moins deux plans d'observation (11, 19) par un même dispositif (7) d'acquisition d'images.

4. Installation de contrôle selon la revendication 3, **caractérisé en ce qu'**elle comprend un compensateur (25) de chemin optique pour compenser la différence de chemin optique entres les rayons provenant des différents plans d'observation (11,19).

5. Installation de contrôle selon la revendication 4, **caractérisé en ce que** le compensateur (25) de chemin optique comprend au moins un bloc de verre (27) placé entre le second miroir (23) de déviation et le dispositif (7) d'acquisition d'images .

6. Installation de contrôle selon l'une quelconque des revendications 1 à 5, **caractérisée en ce que** l'optique de déviation (15) comprend au moins un troisième miroir (41) de déviation placé sur le chemin d'une deuxième portion des rayons de lumière en amont du support (9).

7. Installation de contrôle selon la revendication 6, **caractérisée en ce que** l'optique de déviation (15) comprend en outre au moins un quatrième miroir (47) de déviation vers ledit au moins un dispositif (7) d'acquisition d'images placé sur le chemin d'une deuxième portion des rayons de lumière en aval du support (9) pour permettre une acquisition d'au moins trois plans d'observation (11, 19, 45) par un même dispositif (7) d'acquisition d'images.

8. Installation de contrôle selon l'une quelconque des revendications 1 à 7, **caractérisé en ce que** la lumière émise par le dispositif (5) d'éclairage de la pièce millimétrique (3) est sensiblement monochrome.

9. Installation de contrôle selon l'une quelconque des revendications 1 à 8, **caractérisé en ce que** la lumière émise par le dispositif (5) d'éclairage de la pièce millimétrique (3) est polychrome et **en ce qu'**elle comprend au moins un premier et un second filtre spectral placé d'une part dans la portion des rayons de lumière à éclairage directe de la pièce et d'autre part dans la portion des rayons de lumière soumis à l'optique de déviation.

10. Installation de contrôle selon l'une quelconque des revendications 1 à 9, **caractérisé en ce que** ledit support (9) comprend deux plaques (9A, 9B) d'un matériau transparent formant un « V » et disposées transversalement par rapport à la propagation de la portion des rayons de lumière à éclairage directe.

11. Installation de contrôle selon la revendication 10, **caractérisé en ce que** l'épaisseur de la plaque (9B) du matériau transparent côté dispositif (7) d'acquisition d'images est plus fine que l'épaisseur de la plaque (9A) côté dispositif (5) d'éclairage de la pièce millimétrique (3).

12. Installation de contrôle selon l'une quelconque des revendications 1 à 11, **caractérisé en ce que** le dispositif (7) d'acquisition d'images comprend un objectif télécentrique (7A) et une caméra numérique (7B).

13. Installation de contrôle selon la revendication 12, **caractérisé en ce que** la caméra numérique (7B) est une caméra noir et blanc.

14. Installation selon l'une quelconque des revendications 1 à 13, **caractérisé en ce qu'**elle comporte un bras manipulateur (33) déplaçable selon un axe horizontal (35) et selon un axe vertical (37) pour saisir une pièce millimétrique (3) à contrôler et la placer sur le support (9).
